Europäisches Patentamt

European Patent Office

Office européen des brevets

(11) Veröffentlichungsnummer: **0 309 830**

**A1**

(12) **EUROPÄISCHE PATENTANMELDUNG**

(21) Anmeldenummer: 88115220.1

(22) Anmeldetag: 16.09.88

(51) Int. Cl.⁴: **C25D 3/44 , C25D 5/56 , F16L 58/08**

(30) Priorität: 29.09.87 DE 3732806

(43) Veröffentlichungstag der Anmeldung:
05.04.89 Patentblatt 89/14

(84) Benannte Vertragsstaaten:
AT BE CH DE FR GB IT LI LU NL SE

(71) Anmelder: Siemens Aktiengesellschaft Berlin
und München
Wittelsbacherplatz 2
D-8000 München 2(DE)

(72) Erfinder: Dötzer, Richard, Dr.
Falkenhorst 14
D-8500 Nürnberg(DE)
Erfinder: Iwantscheff, Georg, Dr.
Förrenbacher Strasse 32
D-8500 Nürnberg(DE)

(54) **Gassperrschicht für metallische und nichtmetallische Werkstoffe.**

(57) Als Gassperrschicht, insbesondere für Wasserstoff, Sauerstoff, Tritium und Wasserdampf, für metallische Werkstoffe und nichtmetallische Werkstoffe, wie Glas, Quarz, Keramik und Cermets mit elektrisch leitender Oberfläche sowie leitfähige Kunststoffe, dient eine hochreine Galvanoaluminiumschicht (Reinheitsgrad >99,99 %), die vorzugsweise eine Dicke von 10 bis 20 μm aufweist. Durch Nachbehandlung kann die Galvanoaluminium-schicht verdichtet werden. Die Abscheidung der Galvanoaluminiumschicht erfolgt galvanisch aus aprotischen, sauerstoff- und wasserfreien Elektrolytmedien der allgemeinen Formel
$M^IX.2AlR_3.nLsm$,
worin M ein Alkalimetallion oder ein quartäres Oniumion,
X ein Halogenion, vorzugsweise $F^-$ oder $Cl^-$,
R einen Alkylrest, vorzugsweise $CH_3$, $C_2H_5$, $C_3H_7$ oder $C_4H_9$,
Lsm ein aromatisches Lösungsmittelmolekül, vorzugsweise Toluol, Ethylbenzol, Xylol oder ein Gemisch desselben, und
$n = 0$ bis $12$
bedeutet, gegebenenfalls in Gegenwart eines aromatischen Lösungsmittels, bei einer Badtemperatur von 50 bis 110°C und einer Stromdichte von 0,5 bis 10 A/dm² unter intensiver Badbewegung.

## Gassperrschicht für metallische und nichtmetallische Werkstoffe

Die Erfindung betrifft eine Gassperrschicht für metallische und nichtmetallische Werkstoffe.

Bei metallischen Matrizen wird als Gassperre für Wasserstoff bzw. Tritium bisweilen ein porenfreier galvanischer Überzug aus Kupfer, Zink oder Nickel eingesetzt. Für einen zuverlässigen Schutz sind jedoch auch > 100 $\mu$m dicke Schichten aus diesen Metallen nicht ausreichend, weil die Gase in deren Metallgefügen schon bei 100$^{\bullet}$ C ziemlich leicht beweglich sind.

Aus der DE-OS 21 46 346 ist es bekannt, als Wasserstoffdiffusionssperre für Kernreaktorbrennstäbe zwischen Kernbrennstoff und Hüllrohr eine Schicht aus Aluminium bzw. einer Aluminiumlegierung vorzusehen. Der Schmelzpunkt der Legierung soll dabei möglichst wesentlich höher liegen als die Kernbrennstoffbetriebstemperatur. Durch die Schicht aus Aluminium bzw. der Aluminiumlegierung soll bei absoluter mechanischer Stabilität insbesondere im kalten Zustand eine zufriedenstellende Wasserstoffdiffusionssperre für die gesamte Lebensdauer der Brennstäbe erzielt werden.

Aufgabe der Erfindung ist es, eine Sperrschicht für Gase, insbesondere Wasserstoff und dessen Isotope, auf erforderlichenfalls vorbehandelten Oberflächen von Formstücken und Bauteilen aus metallischen Werkstoffen und nichtmetallischen Werkstoffen mit elektrisch leitender Oberfläche zu finden, die fest haftend und dicht sein soll und ein Entweichen von Gasen aus den Werkstoffen bzw. ein Eindringen in diese verhindert. Diese Gassperrwirkungen sollen auch bei höheren Einsatz- bzw. Betriebstemperaturen gewährleistet sein.

Dies wird erfindungsgemäß dadurch erreicht, daß die Gassperrschicht aus hochreinem Galvanoaluminium vom Reinheitsgrad >99,99 % Al besteht, das gegebenenfalls durch eine Nachbehandlung verdichtet ist. Die Verdichtung erfolgt dabei vorzugsweise mechanisch oder auf chemischem Weg.

Als besonders wirksam haben sich Galvanoaluminiumschichten mit einer Dicke von 10 bis 20 $\mu$m erwiesen.

Das ungewöhnlich duktile, hochreine Galvanoaluminium von Reinheitsgraden >99,99 % Al hat sich als vorzügliches Gassperrschichtmaterial erwiesen. Infolge seines elektrokristallinen, galvanischen Aufwachsvorganges ist es dicht und haftet fest auf den metallischen und nichtmetallischen, aber leitend gemachten Oberflächenbereichen. Die erfindungsgemäßen Galvanoaluminium-Gassperrschichten sind ferner auch frei von Wasserstoff, Sauerstoff und Feuchtigkeit und auch die Substratwerkstoffe werden von solchen Gasen nicht verunreinigt oder korrodiert. Es erfolgt auch keine Wasserstoffversprödung (technisch wichtig für viele Stahlwerkstoffe) und Oxidation, d.h. Oxid- bzw. Hydroxidverunreinigung. In mit Galvanoaluminium beschichtete Werkstoffe dringen Gase der vorstehend genannten Art nicht ein. Die erfindungsgemäße Galvanoaluminium-Gassperrschicht schützt die Werkstoffe aber auch generell vor dem Eindringen, Penetrieren und Eindiffundieren von Gasen, dabei insbesondere auch vor dem Eindringen des "dünnsten" aller Gase, dem Wasserstoff, und dessen Isotopen, dem Deuterium und dem radioaktiven Tritium.

Selbst gegen Wasserstoff hält die Gassperrschicht bis etwa 300$^{\bullet}$ C einer Penetration und Diffusion stand und stellt für die "dickeren" Isotope $D_2$ und $T_2$ eine völlige Sperre dar, die anwendungstechnisch vorteilhaft genutzt werden kann.

Analog wird ein Ein- wie auch ein Ausdiffundieren der Gase Sauerstoff, Stickstoff, Kohlenmonoxid, Kohlendioxid, Schwefel dioxid und Ammoniak sowie von Wasserdampf und Schwefelwasserstoff und auch von Kohlenwasserstoffen samt deren Isotopenderivaten, wie z.B. $D_2O$, HDO, $T_2S$, $ND_3$ und $C_2D_6$, verhindert.

Geeignete nichtmetallische Werkstoffe sind Glas, Quarz, Keramik und Cermets mit elektrisch leitender Oberfläche sowie leitfähige Kunststoffe.

Die Erfindung betrifft auch ein Verfahren zur Herstellung einer Gassperrschicht auf metallischen Werkstoffen und nichtmetallischen Werkstoffen mit elektrisch leitender Oberfläche. Hierzu werden die elektrisch leitenden Oberflächen der Werkstoffe galvanisch in einem aprotischen, sauerstoff- und wasserfreien aluminiumorganischen Elektrolytmedium der allgemeinen Formel

$$M^IX.2AlR_3.nLsm,$$

worin M ein Alkalimetallion oder ein quartäres Oniumion,
X ein Halogenion, vorzugsweise $F^-$ oder $Cl^-$,
R einen Alkylrest, vorzugsweise $CH_3$, $C_2H_5$, $C_3H_7$ oder $C_4H_9$,
Lsm ein Molekül eines aromatischen Lösungsmittels, vorzugsweise Toluol, Ethylbenzol oder Xylol bzw. ein Gemisch derselben, und
n = 0 bis 12
bedeutet, gegebenenfalls in Gegenwart eines aromatischen Lösungsmittels, bei Badtemperaturen von 50 bis 110$^{\bullet}$ C und einer Stromdichte von 0,5 bis 10 A/dm$^2$ unter intensiver Badbewegung mit Galvanoaluminium beschichtet. Bei diesen niedrigen Aufbringtemperaturen sind störende Einflüsse und Veränderungen des Werkstoffgefüges, die die Werkstoffeigenschaften, wie Härte, Elastizität und Festigkeit, beeinträchtigen, ausgeschlossen.

Metallische Oberflächen können nach üblicher werkstoffspezifischer Reinigung direkt und nichtmetallische Oberflächen nach werkstoffspezifischer Reinigung und Vorbeschichten mit einer dünnen 0,1 bis 2 $\mu$m dicken leitfähigen Schicht aus Aluminium oder einem anderen geeigneten Metall oder aus Graphit bzw. leitfähigem Kohlenstoff galvanisch beschichtet werden.

Die dünne leitfähige Zwischenschicht wird vorzugsweise auf stromlosem, reduktiv-chemischem Weg oder durch thermischen Abbau von verdampfbaren Verbindungen, insbesondere Organometallverbindungen, aufgebracht.

Die erfindungsgemäß aufgebrachte Galvanoaluminiumschicht, die vorzugsweise eine Dicke von 10 bis 20 $\mu$m aufweist, kann noch chemisch oder mechanisch nachbehandelt werden. Die mechanische Nachbehandlung kann beispielsweise durch Hartstoff-Trommeln oder Glasperlen-Strahlen erfolgen, wodurch ein weiteres Verdichten der Galvanoaluminium-Elektrokristallite erreicht wird.

Die chemische Nachbehandlung kann durch Fluoridieren mittels HF-Dampf oder durch Oxidieren mittels heißer Luft oder überhitztem Wasserdampf vorgenommen werden, wobei sich $AlF_3$ bzw. oberflächlich $AlO(OH)$ bildet.

Für die Beschichtung von Lichtwellenleiter-Glas- und -Quarzfasern hat sich die Beschichtung durch chemisch-reduktiven Abbau oder auch durch thermischen Abbau von gelösten oder verdampften Metallverbindungen, insbesondere von Organometallverbindungen, wie z.B. $Al(iC_4H_9)_3$, $In(C_2H_5)_3$, $Ni(CO)_4$ und $CH_3Au:P(CH_3)_3$, sowie von bestimmten Kohlenwasserstoffen, wie n-Heptan, in dünner Schicht als geeignet erwiesen.

Gassperrschichten gemäß der Erfindung können an Oberflächen und Zwischenschichten von Formstücken und Bauteilen aus Metall und Nichtmetall zur Verhinderung der Permeation sowohl von Wasserstoff und seinen Isotopen, von Sauerstoff und Feuchtigkeit als auch der vorstehend genannten Gase sowie vieler anderer ein-und mehratomiger Gasmoleküle und auch von Wasserdampf eingesetzt werden. Mit besonderem Vorteil werden solche Schichten zum Oberflächenschutz von Lichtwellenleitern und Überspannungsableitern eingesetzt. Bei letzteren vornehmlich dann, wenn sie eine Tritiumdotierung aufweisen.

Die Erfindung soll anhand der folgenden Beispiele noch näher erläutert werden.

## Beispiel 1

Abkapselung $T_2$-dotierter Überspannungsableiter durch allseitige Beschichtung mit einer ca. 12 $\mu$m

dicken Galvano-Al-Schicht.

Wie schon der Name bzw. die Bezeichnung "Überspannungsableiter" erkennen läßt, ist dessen Funktion der Schutz von elektrischen Geräten und Anlagen vor Überspannungen, die z.B. bei Schaltvorgängen oder durch Blitzschlag auftreten können. Der Überspannungsableiter muß in Funktion treten, wenn eine gefährlich hohe Überspannung auf ihn trifft, und den Strom zur Erde ableiten. Dabei muß er jedoch einen vollständigen Zusammenbruch der Spannung wegen der Funktionstüchtigkeit des durch ihn geschützten Gerätes bzw. der Anlage vermeiden können.

Tritium-dotierte Überspannungsableiter ermöglichen infolge der Radioaktivität ($\beta$-Strahler mit 12,3 Jahren Halbwertszeit) eine vorteilhafte Einstellung der Widerstandscharakteristik des Überspannungsableiters, müssen aber aus Gründen der Bewahrung der Tritiummenge und aus Sicherheitsgründen gekapselt werden.

Die zylindrische Abkapselung eines $T_2$-dotierten Überspannungsableiters, deren Oberfläche aus Nickel besteht, das als solches - ebenso wie Kupfer - Wasserstoff, Deuterium und Tritium durchdiffundieren läßt, wird in einem aluminiumorganischen Elektrolyten bei ca. 100°C und einer Stromdichte von 2 A/dm² unter Bewegung des Bades beschichtet. Die erhaltene ca. 12 $\mu$m dicke Galvanoaluminiumschicht läßt bis ca. 300°C kein Tritium entweichen. Dabei befindet sich der Überspannungsableiter normalerweise bei Raum- bzw. Umgebungstemperatur und wird nur im Funktionsfall kurzzeitig auf Temperaturen von etwa 80°C erwärmt.

Infolge der Radioaktivität des $T_2$ kann man durch die Galvano-Al-Gassperrschicht diffundierendes $T_2$, bei Anordnung des gekapselten Bauteiles in einem luftdurchströmten Rohr, mittels Geigerzähler im austretenden Luftstrom leicht messend erfassen und so in Abhängigkeit der Versuchstemperatur die penetrierende Menge messen bzw. ermitteln.

Mit dieser Prüfanordnung konnte festgestellt werden, daß die Galvano-Al-Schicht bis zu einer Dicke von etwa 8 $\mu$m noch Poren aufweist, die Gas durchlassen, ca. 12 $\mu$m Schichtdicke aber eine sichere Gassperrschicht ergibt, die sich auch bis zu den vorstehend genannten höheren Temperaturen als dicht erweist.

Durch Trommeln der mit Galvanoaluminium beschichteten Bauteilzylinder mittels Al-Oxidkeramik-Kugeln von 3 bis 5 mm Durchmesser läßt sich das elektrokristallin aufgewachsene Galvano-Al-Gefüge verdichten und dann schon bei den resultierenden, etwas kleineren Schichtdicken Gasdichtheit gegen Tritium erreichen.

Mit der gegen Tritium aufgezeigten Gassperrwirkung der Galvano-Al-Beschichtung wird zugleich die Gassperrwirkung gegen volumenmäßig größere Gasatome (z.B. der Edelgase) und Gasmoleküle (wie $O_2$, $O_3$, $N_2$, CO, $CO_2$, $H_2O$, $SO_2$, $H_2S$, $NH_3$, $CH_4$) verständlich, sofern diese inert sind oder mit Aluminium Feststoffe bilden, wie $Al_2O_3$ oder $Al_2S_3$ sowie AlO(OH). Wenn letztgenanntes zutrifft, so gilt dies auch bei aggressiven Gasen, z.B. bei HF und $F_2$, mit denen festes $AlF_3$ entsteht, wodurch die Galvano-Al-Sperrschicht oberflächlich noch verdichtet wird. Solche chemische Abdichtungsbehandlungen kann man auch absichtlich vornehmen und für eine weitere Verdichtung der Galvano-Al-Schicht nützen, wie vorstehend bereits ausgeführt.

Mit Hilfe der beschriebenen T-Detektionsmethode läßt sich auch eine Optimierung der Galvano-Al-Gassperrschichtdicke bequem vornehmen und so die Abscheidung unnötig dicker Galvano-Al-Schichten vermeiden.

Beispiel 2

Galvano-Al-Gassperre-Beschichtung von Lichtwellenleitern, z.B. aus Glas- oder Quarzfasern, gegen das störende bzw. zerstörende Eindiffundieren von Wasserstoff und/oder Wasserdampfmolekülen.

Es ist dem Fachmann bekannt, daß die heute gefertigten, üblicherweise mit Kunststoffüberzügen gegen mechanische Verletzungen beim Verlegen und im Einsatz geschützten Lichtwellenleiter gegen das Eindringen von Wasserstoff und Wasserdampf empfindlich sind, weil ihre Funktionseigenschaften der internen Totalreflexion unter diesen eindiffundierten Stoffen leiden, und deshalb z.B. in Raffinerien, Gaswerken und chemischen, insbesondere petrochemischen Anlagen, wo Wasserstoff allgegenwärtig ist, nicht zum Einsatz gebracht werden können. Das bedeutet in der Praxis eine beträchtliche Einschränkung des Einsatzes der an sich fortschrittlichen, vorteilhaften und gerade in sicherheitstechnischer Hinsicht zuverlässigen Lichtwellenleitertechnik, die eine zukunftsträchtige elektrotechnische Schlüsseltechnologie ist.

Organische Kunststoffe, wie sie bisher für die Umhüllung der Glas- bzw. Quarzfasern eingesetzt werden, sind aber generell wasserstoff- und wasserdampfdurchlässig, können also nicht verhindern, daß $H_2$ und $H_2O$ an die Oberfläche der hydrophilen Glas-bzw. Quarzfasern gelangen und dann auch in diese eindiffundieren. Weil die Glas- bzw. Quarzfasern oberflächlich keine elektrische Leitfähigkeit aufweisen, kann Galvanoaluminium aber nicht unmittelbar elektrochemisch aufgebracht werden.

Die Lichtwellenleiter-Glas- bzw. -Quarzfasern werden daher zunächst in unmittelbarer Verbindung mit ihrer Herstellung mittels Faserziehens aus dem schmelzflüssigen Glas- bzw. Quarzstabmaterial mit einer elektrisch leitfähigen, dünnen Metall- oder Kohlenstoffschicht beschichtet. Hierzu läßt man die frisch ausgezogene, noch heiße Faser mit der optimalen Oberflächentemperatur in einen Dampf- bzw. Flüssigkeitsstrahl von z.B. $Al(iC_4H_9)_3$, $In(C_2H_5)_3$, $Ni(CO)_4$, $CH_3Au{:}P(CH_3)_3$ oder n-Heptan eintreten. Durch thermischen Abbau scheidet sich hierbei eine etwa 0,1 μm dicke Schicht auf der frisch gebildeten Faseroberfläche ab. Auf der hinreichend elektrisch leitenden Oberfläche der Faser kann dann der Lichtwellenleiter in einem kontinuierlichen Verfahren galvanisch beschichtet werden.

Hierzu wird, wie bei der heute schon ausgeübten Glasfaser- bzw. Quarzfaser-Herstellungstechnik, die Faser ca. 4m senkrecht nach unten gezogen und dann über eine Umlenkrolle bzw. -scheibe von ca. 30 cm Durchmesser in die Waagerechte geführt. Die Umlenkrolle bzw. -scheibe wird in der Faserlaufrille mit versilbertem Kupfer belegt und im galvanischen Stromkreis der Galvano-Al-Abscheidung kathodisch belastet; sie stellt die untere Kontaktierstelle für die nunmehr leitfähige Faser dar. Eine obere kathodische Kontaktierstelle wird durch zwei einander gegenüber und in der Ansatzhöhe etwas versetzte, federgelagerte Silberblechbügel gebildet, die unterhalb der zur Metall- bzw. Kohlenstoffbeschichtung dienenden Vorrichtung angeordnet sind.

Kurz unterhalb der oberen Kontaktierstelle läuft die Faser in die mit einem trockenem Stickstoffstrom nach außen abgesicherte Galvano-Aluminiervorrichtung ein, die zur Vermeidung von Lösemittelverlusten nach oben mit einem Intensivkühler abschließt und mindestens eine Dreistrahl-Strahlgalvanisiereinheit auf weist, vorteilhafterweise aber drei oder mehr Einheiten, die untereinander angeordnet sind. Eine solche Einheit besteht aus drei zentrisch im Winkelabstand von 120° in einer Ebene angeordneten Strahldüsen aus elektrisch nicht leitfähigem, chemisch und thermisch beständigem Werkstoff, vorzugsweise Duran®-Glas oder Keramik. Die Strahldüsen weisen im Strahlrohrschaft jeweils eine nach außen kontaktierte Elektrode aus inertem Material, z.B. Edelstahl, Silber oder Kupfer, auf und können über eine gemeinsame Ringleitung mit aluminiumorganischer Elektrolytflüssigkeit gespeist werden. Für die Galvanoaluminium-Beschichtung der Faseroberfläche wird die Ringleitung mittels einer magnetisch angetriebenen Flügelradpumpe aus einem Reservoir mit Elektrolytflüssigkeit von ca. 100°C versorgt, und die Faser wird durch den Elektrolytstrahl-Treffpunkt im Zentrum der Anordnung von oben kommend nach unten geführt und bei anodischer Belastung der Strahlrohr-Elektroden unter Anwendung von relativ hohen Stromdichten, etwa 3 bis 10 A/dm², allseitig mit Galvanoaluminium beschichtet.

Die Dreistrahl-Strahlgalvanisiereinheit ist in einem zylindrischen Bauteil zentrisch angeordnet, das bei 200 mm Durchmesser eine Höhe von ca. 120 mm hat und nach oben sowie unten durch Planflansche abschließt, die ein Aufeinandersetzen von mehreren solchen Einheiten ermöglichen. Die Zylinderwandungen weisen einen Schlifftubus auf zum Einsetzen der eigentlichen Drehstrahl-Ringleitungsanordnung samt Stromzuleitung für die drei Elektroden und Zuleitungsansatz für die Elektrolytflüssigkeit; zugleich sind sie von außen heizbar, um eine Abkühlung des Elektrolyten zu verhindern.

Auf die oberste Dreistrahl-Strahlgalvanisiereinheit wird -ebenfalls mittels Planflansch - die bereits erwähnte Bauteileinheit aus Intensivkühler und Stickstoffzuleitung als Abschluß der Galvano-Aluminiervorrichtung aufgesetzt und mit den gebräuchlichen Planflansch-Verschraubungen mit dieser fest und dicht verbunden.

In gleicher Verbindungsweise wird an die unterste Dreistrahl-Strahlgalvanisiereinheit eine Abschluß-Bauteileinheit mit Planflansch angesetzt, die - bei 200 mm Bauhöhe - topfförmig ausgebildet ist, um die aus den Strahldüsen spritzende und nach unten fließende Elektrolytflüssigkeit aufzunehmen und über einen Siphon in das beheizte Elektrolytreservoir zurückzuführen. Damit ist der Elektrolytflüssigkeitskreislauf geschlossen.

Für den Durchlaß der mit Galvano-Al beschichteten Faser nach unten besitzt das topfförmige Abschluß-Bauteil von ca. 200 mm Durchmesser in seiner Zylindermitte ein Rohr, das knapp unterhalb der Planflanschebene endet und wie eine Düse nach oben spitz ausläuft. Unterhalb des topfförmigen Bauteils schließt das Rohr mit einer ebensolchen Düsenmündung ab, so daß der trockene und sauerstofffreie Stickstoff, der durch einen seitlich am Rohr angebrachten Stutzen unter geringem Überdruck eingeleitet wird, die Galvano-Aluminiervorrichtung gegen die Außenatmosphäre abschließt und an der beschichteten Faser anhaftende Elektrolytflüssigkeit wegbläst. Restliche noch anhaftende Elektrolytflüssigkeit wird dann in einem darunter angeordneten Spritzrohr mittels Lösemittel abgewaschen, und die Galvano-Al-Oberfläche der Faser wird dann mit warmer Luft trockengeblasen.

Je nach Abziehgeschwindigkeit der Faser und gewünschter Galvano-Al-Schichtdicke sind die erforderliche Anzahl der übereinander angeordneten Dreistrahl-Strahlgalvanisiereinheiten und/oder die aufzuwendenden Stromdichten festzulegen, wobei erfahrungsgemäß etwa 10 $\mu$m dicke Galvano-Al-Schichten als Gassperrschicht genügen und durch die mechanische Belastung der duktilen Galvano-Al-Schicht auf den Umlenkrollen bzw. -scheiben eine Schichtverdichtung herbeigeführt wird.

Eine gleichzeitig allseitige Verdichtung der galvanisch aufgewachsenen Aluminiumschicht läßt sich auch nach dem Ziehsteinprinzip herbeiführen, und durch die Gefügeverformung läßt sich zugleich auch eine Verfestigung der Schicht erreichen, ohne eine Verunreinigung derselben zu verursachen. Hierzu wird die mit Galvano-Al beschichtete Faser unmittelbar nach dem Trockenblasen und noch vor der ersten Umlenkrolle bzw. -scheibe durch mindestens zwei Ziehsteine aus poliertem Hartstoff, z.B. Korund oder Edelstahl, gezogen, die fein abgestuft die Galvano-Al-Schicht mechanisch glätten und zugleich verdichten. Infolge der vorteilhaft hohen Duktilität des hochreinen Galvanoaluminiums gelingt dies ohne Überlastung der Zugfestigkeit der Faser, und das Galvanoaluminium erweist seine gute Selbstschmiereigenschaft.

An auf diesem Verfahrensweg mit Galvanoaluminium beschichteten Fasern läßt sich die Gassperrwirkung der Galvano-Al-Beschichtung gegen Wasserstoff oder Wasserdampf oder beliebige Gemische dieser beiden Gase, der Realität beim Einsatz entsprechend, in Abhängigkeit von Konzentration, Verweil- bzw. Einwirkdauer und Temperatur in einer Prüfkammer aufgrund der Konstanz oder Änderung der optischen Eigenschaften, insbesondere der Totalreflexionsqualität bzw. Dämpfung und Dispersion verschiedener Lichtwellenlängen, ermitteln.

Hierzu wird zunächst eine hinreichend große Länge von unbeschichtetem Fasermaterial, eventuell zu einer Spule aufgeschossen (lockere Windungen, damit allseitig Gas zukommen kann), in einer Prüfkammer einer Wasserstoff-Atmosphäre oder Wasserdampf oder einem Gemisch der beiden Gase (definierte Mengen) bei festgelegter Kammertemperatur ausgesetzt, und über die nach außen - d.h. aus der Kammer abgedichtet - geführten Faserenden (die durch ein dickeres Aluminiumröhrchen vor der Umluft geschützt sind) werden in Abhängigkeit von der Zeit die Änderungen der optischen Eigenschaften registriert. Nach der Erfassung eines größeren Änderungsbereiches wird die Kammertemperatur von z.B. 25° C auf 60° C angehoben und erneut die auftretende Änderung der optischen Eigenschaften registriert. Auf diese Weise erhält man ein deutliches Bild vom störenden Einfluß des eindiffundierenden Wasserstoffs, das man durch noch höhere Kammertemperaturen weiter verstärken kann.

Sodann werden mit dem gleichen Fasermaterial, das nun aber mit 5, 10 bzw. 15 $\mu$m Galvanoaluminium beschichtet ist, ebensolche Längen bzw. Spulen in die Prüfkammer eingesetzt und deren optische Eigenschaftsänderung in analoger Weise, wie vorstehend beschrieben, registriert. Dabei zeigt sich, daß bereits eine Galvano-Al-Beschichtung von 5 $\mu$m eine beträchtliche Schutzwirkung hat und die Eindiffusion des Wasserstoffs erheblich verlangsamt, daß aber für eine totale Gassperre diese Schichtdicke noch nicht ausreichend ist. Bei einer

Schichtdicke von 10 μm ist das dann aber der Fall, und 15 μm gewährleisten eine zusätzliche Langzeitsicherheit, die durch das vorstehend beschriebene Glätten und Verdichten noch angehoben werden kann. Eine Optimierung der Galvano-Al-Schichtdicke - mit und ohne Verdichtung - ist so meßtechnisch leicht zu ermitteln.

Auf demselben Weg - mittels Prüfkammer und Registrierung der optischen Eigenschaftsänderung bei unbeschichteten und mit Galvanoaluminium in verschiedenen Schichtdicken beschichteten Fasern - läßt sich auch der schädliche Einfluß bzw. dessen Ausschluß durch die Gassperrwirkung von Wasserdampf feststellen und herausfinden, daß schon mit einer Galvano-Al-Schichtdicke von 8 μm ein hervorragender Schutz der Fasern und ihrer optischen Eigenschaften erzielt werden kann.

Weil im realen Einsatz der Lichtwellenleiter Feuchtigkeit ($H_2O$) und Wasserstoff zugleich zugegen sind und der Wasserdampfgehalt der Atmosphäre die Penetration bzw. Diffusion des Wasserstoffs fördert, werden vorzugsweise Galvano-Al-Beschichtungen von 10 bis 20 μm angewandt, wobei ein anschließendes Glätten und Verdichten der applizierten Galvano-Al-Schicht, vorzugsweise mittels "Ziehstein"-Technik, die Gassperre-Schutzwirkung noch erhöht, und somit schon mit geringeren primär aufgebrachten Galvano-Al-Schichten voller Schutz erreicht werden kann.

**Ansprüche**

1. Gassperrschicht für metallische und nichtmetallische Werkstoffe, **dadurch gekennzeichnet,** daß sie aus hochreinem Galvanoaluminium vom Reinheitsgrad >99,99 % besteht, das gegebenenfalls durch eine Nachbehandlung verdichtet ist.

2. Gassperrschicht nach Anspruch 1, **dadurch gekennzeichnet,** daß die Galvanoaluminiumschicht eine Dicke von 10 bis 20 μm aufweist.

3. Gassperrschicht nach Anspruch 1 oder 2, **dadurch gekennzeichnet,** daß die Galvanoaluminiumschicht auf mechanischem oder auf chemischem Weg verdichtet ist.

4. Verfahren zur Herstellung einer Gassperrschicht auf metallischen Werkstoffen und nichtmetallischen Werkstoffen mit elektrisch leitender Oberfläche nach einem der Ansprüche 1 bis 3, **dadurch gekennzeichnet,** daß auf die elektrisch leitende Oberfläche galvanisch in einem aprotischen, sauerstoff- und wasserfreien aluminiumorganischen Elektrolytmedium der allgemeinen Formel

$M^I X.2AlR_3.nLsm$,

worin M ein Alkalimetallion oder ein quartäres Oniumion,

X ein Halogenion, vorzugsweise $F^-$ oder $Cl^-$,
R einen Alkylrest, vorzugsweise $CH_3$, $C_2H_5$, $C_3H_7$ oder $C_4H_9$,
Lsm ein aromatisches Lösungsmittelmolekül, vorzugsweise Toluol, Ethylbenzol, Xylol oder ein Gemisch derselben, und
n = 0 bis 12 Mol

bedeutet, gegebenenfalls in Gegenwart eines aromatischen Lösungsmittels, bei einer Badtemperatur von 50 bis 110° C und einer Stromdichte von 0,5 bis 3 $A/dm^2$ bzw. bei Fasern und Drähten von 3 bis 10 $A/dm^2$ unter intensiver Badbewegung eine Galvanoaluminiumschicht aufgebracht wird.

5. Verfahren zur Herstellung einer Gassperrschicht nach Anspruch 4, **dadurch gekennzeichnet,** daß auf den nichtmetallischen Werkstoff zunächst eine elektrisch leitende Schicht durch chemisch-reduktiven Abbau von ammoniakalischer Cu- oder Ag-Nitrat-Lösung mit Hydrazin oder Phosphonsäure oder durch thermischen Abbau von Al- oder In-Trialkylen, Ni-Tetracarbonyl oder Methylgold-trimethylphosphin aufgebracht wird.

6. Verfahren zur Herstellung einer Gassperrschicht nach Anspruch 4, **dadurch gekennzeichnet,** daß der nichtmetallische Werkstoff zunächst mit einer 0,1 bis 2 μm dicken elektrisch leitenden Schicht versehen wird.

7. Verfahren zur Herstellung einer Gassperrschicht nach Anspruch 6, **dadurch gekennzeichnet,** daß die elektrisch leitende Schicht eine Metallschicht ist und vorzugsweise aus Aluminium, Indium, Nickel oder Gold besteht.

8. Verfahren zur Herstellung einer Gassperrschicht nach Anspruch 6, **dadurch gekennzeichnet,** daß die elektrisch leitende Schicht aus Graphit oder leitfähigem Kohlenstoff besteht.

9. Verfahren zur Herstellung einer Gassperrschicht nach Anspruch 5, **dadurch gekennzeichnet,** daß auf der elektrisch leitenden Schicht eines dünnen Lichtwellenleiters bei einer Stromdichte von 3 bis 10 $A/dm^2$ eine 8 bis 15 μm dicke Galvanoaluminiumschicht abgeschieden wird.

10. Verfahren zur Herstellung einer Gassperrschicht nach Anspruch 9, **dadurch gekennzeichnet,** daß die Galvanoaluminiumschicht mittels einer Dreistrahl-Strahlgalvanisiervorrichtung abgeschieden wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 111 369 (SIEMENS) --- | | C 25 D 3/44 C 25 D 5/56 F 16 L 58/08 |
| A | DE-A-3 104 161 (SIEMENS) --- | | |
| A | GB-A-2 020 699 (MESSERSCHMITT) ----- | | |

**RECHERCHIERTE SACHGEBIETE (Int. Cl.4)**

C 25 D 3/44
C 25 D 5/56
C 25 D 7/04
C 03 C 25/02
F 16 L 58/08
F 16 L 9/14

Der vorliegende Recherchenbericht wurde für alle Patentansprüche erstellt

| Recherchenort | Abschlußdatum der Recherche | Prüfer |
|---|---|---|
| DEN HAAG | 08-12-1988 | VAN LEEUWEN R.H. |